# FASCICULE DE BREVET EUROPEEN

(11) **EP 0 675 458 B1**
(45) Date de publication et mention de la délivrance du brevet: **22.12.1999**
(21) Numéro de dépôt: 95400671.4
(22) Date de dépôt: 27.03.1995
(51) Int. Cl.: G06K 17/00, B65C 9/46

(54) **Procédé automatique d'étiquetage et de contrôle de poches de sang en retour d'analyse et machine en comportant application**
Automatisches Verfahren zum Etikettieren und Kontrollieren von aus Untersuchung zurückkehrenden Blutsäcken und Maschine zur seiner Anwendung
Automatic method for labeling and checking blood packs coming back from analysis and device for its implementation

(30) Priorité: 31.03.1994 FR 9403810
(43) Date de publication de la demande: 04.10.1995
(73) Titulaire: ASSOCIATION POUR L'ESSOR DE LA TRANSFUSION SANGUINE DANS LA REGION DU NORD, 59000 Lille (FR)
(72) Inventeur: Spriet, Olivier, F-59790 Ronchin (FR); Becquart, Jean-Pierre, F-59150 Wattrelos (FR)
(74) Mandataire: Lhuillier, René

(56) Documents cités:
- US-A- 3 619 568
- US-A- 4 857 713
- US-A- 5 150 795

## Description

L'invention se rapporte à un procédé et une machine automatique permettant l'impression, la dépose et le contrôle en temps réel d'étiquettes sur des poches de sang en retour d'analyse, par interception des paramètres transférés d'un fichier central.

On sait que les poches de sang doivent porter toutes les indications codées ou en clair, qui sont nécessaires pour identifier le donneur et connaître les caractéristiques du sang après son analyse. Jusqu'à présent le marquage des poches s'effectue manuellement par collage d'étiquettes appropriées en fonction du résultat des analyses. Ces opérations longues et fastidieuses du fait des contrôles nécessaires à effectuer qui n'excluent pas tout risque d'erreur, ont conduit la Demanderesse à mettre au point et à réaliser une machine automatique d'étiquetage qui rend ces opérations plus rapides et plus fiables du fait qu'elle incorpore des dispositifs de contrôle.

US-A-3 619 658 décrit un procédé ainsi qu'un système d'étiquetage et d'identification de poches de sang en retour d'analyse.

US-A-5 150 795 propose un procédé ainsi qu'un système de triage et d'étiquetage d'échantillon de sang. Ledit système comprend une table d'alimentation, plusieurs moyens de transfert situés les uns à la suite des autres et pouvant acheminer les échantillons de sang jusqu'à des goulottes de triage, et au moins deux postes de lecture de codes et un poste d'étiquetage.

Un objet principal de la présente invention consiste donc en un procédé automatique d'étiquetage et de contrôle des poches de sang en retour d'analyse, procédé qui consiste :
- à déplacer par un premier moyen de transfert une poche de sang jusqu'à un premier poste de lecture du code ainsi que de l'analyse antérieure du sang prélevé,
- à comparer les données de lecture à celles mémorisées dans le fichier central d'un ordinateur,
- à poursuivre le déplacement de la poche de sang par ledit premier moyen de transfert jusqu'à un poste d'étiquetage automatique auquel l'ordinateur a transmis les données nécessaires à l'impression des étiquettes,
- à immobiliser la poche de sang durant l'opération de pose d'étiquettes,
- à déplacer la poche de sang étiquetée, par un second moyen de transfert, jusqu'à un poste de pesée,
- à évacuer la poche de sang, après vérification des lectures de codes-barre par un deuxième poste de lecture de code et vérification de la pesée, par un troisième moyen de transfert, vers une goulotte de réception des produits aptes à transfusion.

En complément du procédé, la poche de sang est évacuée du premier moyen de transfert si le fichier central de l'ordinateur n'a pas enregistré le code du donneur et l'analyse effectuée antérieurement, du sang prélevé, et elle est aussi évacuée du troisième moyen de transfert vers une goulotte de réception des produits rejetés quand la lecture des codes et de la pesée n'est pas correcte.

Un autre objet principal de la présente invention concerne une machine pour la mise en oeuvre dudit procédé, machine dont le châssis supporte à une extrémité une table fixe d'alimentation et plusieurs moyens de transfert situés les uns à la suite des autres, pouvant acheminer les poches de sang vers des goulottes d'évacuation montées en bout du dernier moyen de transfert, et selon laquelle, au moins deux postes de lecture des codes et étiquettes portés par les poches de sang sont disposés respectivement en amont et en aval d'au moins un robot de dépose d'étiquettes et selon laquelle elle dispose de moyens d'évacuation des poches hors de leurs parcours d'acheminement normal, réagissant aux anomalies décelées par lesdits postes de lecture, un moyen de transfert comportant une unité de pesage.

Avantageusement, les moyens de transfert sont des tapis constitués de trois bandes sans fin à entraînement motorisé et déroulement intermittent, chacun équipé latéralement de cellules photoélectriques aptes à déceler le passage d'une poche de sang.

Selon des caractéristiques particulières de l'invention, un premier poste de lecture est disposé au-dessus du premier tapis à proximité de la table d'alimentation, un second poste de lecture étant disposé au-dessus du troisième tapis, en amont des goulottes d'évacuation.

En outre, un moyen d'évacuation est constitué d'un vérin pousseur déplaçable au-dessus du premier tapis en aval du premier poste de lecture et d'une goulotte d'évacuation disposée sur un côté dudit tapis, tandis qu'un autre moyen d'évacuation est constitué d'un vérin apte à déplacer un tiroir de distribution des poches de sang, placé au-dessus du troisième tapis en aval du second poste de lecture

Selon une caractéristique avantageuse de l'invention le robot de dépose d'étiquettes est équipé d'une potence fixe se développant au-dessus du premier tapis et portant un bras pivotant pouvant coulisser sur la potence, l'extrémité inférieure du bras étant un vérin se terminant par une ventouse porte étiquette.

D'autres caractéristiques particulières et avantages de l'invention apparaîtront à la lecture de la description qui va suivre d'un exemple de réalisation de machine dans lequel il sera fait référence aux dessins annexés qui représentent :

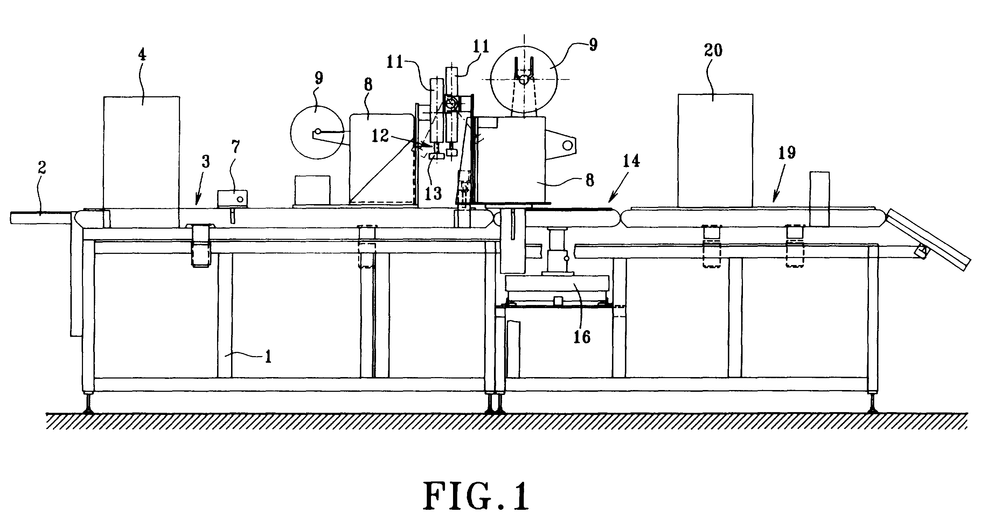

figure 1, une vue schématique en élévation, de la machine
figure 2, une vue en plan
figure 3, une vue en plan, à plus grande échelle, de la partie centrale de la machine.

La machine représentée sur les figures se présente comme une table allongée dont le châssis 1 qui supporte les principaux composants sert aussi d'armoire de logement pour les câblages et équipements électriques et pneumatiques, et à cet effet elle peut être équipée de portes d'accès non représentées.

A une extrémité du châssis se trouve une table fixe d'alimentation 2 venant en continuité de surface avec un premier tapis 3 constitué d'une bande sans fin à entraînement motorisé et déroulement intermittent. Le tapis se déroule sous un lecteur laser 4 disposé à proximité de la table. Des cellules photoélectriques 5 sont placées de part et d'autre du tapis au niveau du lecteur, de façon à déceler le passage d'une poche de sang et déclencher l'arrêt du tapis.

En aval du lecteur 4, il est prévu sur un côté du tapis une goulotte d'évacuation 6, légèrement en contrebas. Du côté opposé, un vérin pousseur 7 déplaçable au-dessus du tapis peut dégager une poche de sang vers la goulotte c'est-à-dire en dehors de son parcours d'acheminement normal.

Plus loin, dans la zone terminale du tapis 3 sont disposés, de part et d'autres, deux robots 8 de dépose d'étiquettes. Chacun d'eux est équipé d'un rouleau d'étiquettes 9, d'une potence fixe 10 se développant au-dessus du tapis et portant un bras pivotant 11 pouvant coulisser sur la potence. L'extrémité inférieure du bras est un vérin 12 se terminant par une ventouse 13 porte-étiquette.

L'arrêt du tapis est asservi à l'arrivée d'une poche de sang grâce à une cellule photoélectrique 17. La poche de sang est alors maintenue pendant l'opération de dépose d'étiquettes, par des mâchoires de blocage 18 qui font butée et sont rétractables. La même poche de sang est ainsi soumise aux deux robots qui peuvent ainsi déposer chacun une étiquette différente.

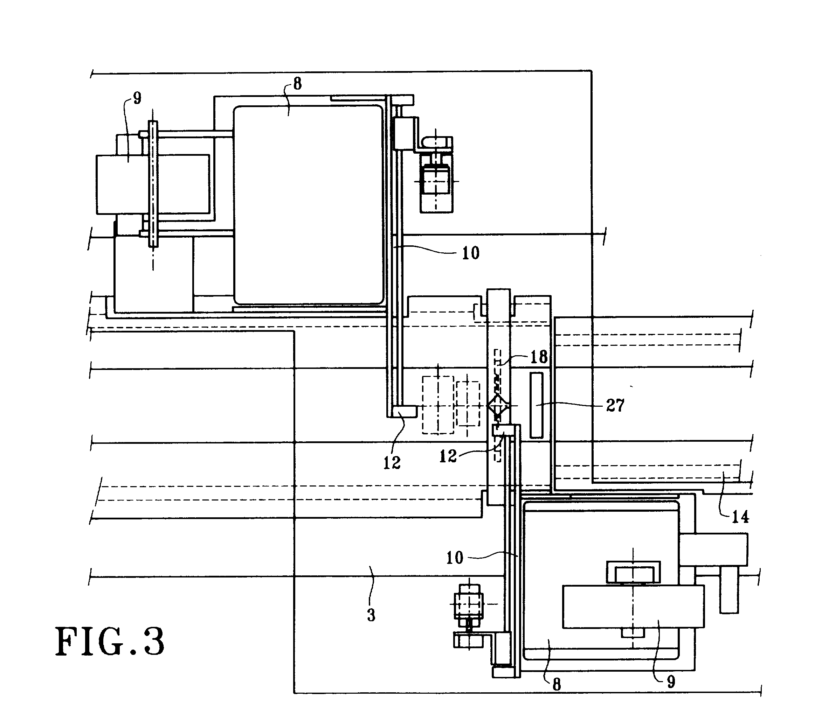

Enfin, au-dessus de l'extrémité du tapis 3 est montée un rouleau de collage 27 éventuellement rappelé par un contre poids (figure 3).

Un second tapis 14 à déroulement intermittent venant dans le prolongement du précédent, recueille les poches de sang libérées par les robots de dépose d'étiquettes. Ce tapis de plus courte longueur est aussi muni de cellules photoélectriques 15.

Il constitue une unité de pesage des poches de sang et est supporté à cet effet par une balance 16.

La machine comporte aussi un troisième tapis 19, dans le prolongement du tapis 14. Il est pourvu d'un lecteur laser 20 et d'un jeu de cellules photoélectriques 21. En sortie du lecteur 20 est monté en aval un vérin 22 apte à déplacer un tiroir de distribution 23 pour orienter la poche de sang vers l'un ou l'autre de deux goulottes d'évacuation 24, 25 placées en bout de la machine.

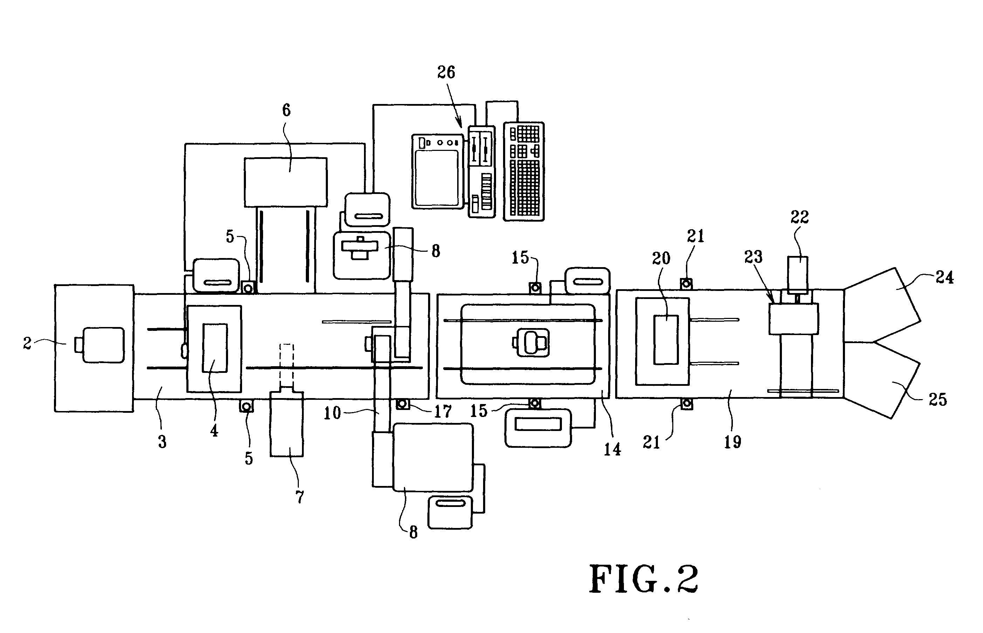

Les différents détecteurs tels que les lecteurs laser 4, 20 la balance 16, ainsi que les robots de dépose 8 sont raccordés à un ordinateur central 26 (figure 2) avec logiciels d'application et fichier de travail.

La machine précédemment décrite fonctionne de la façon suivante :

L'opérateur dépose sur la table d'entrée 2 les poches de sang , dans un ordre aléatoire, dès qu'un signal lumineux d'avertissement l'y autorise. Les poches sont à tour de rôle, et dans un sens défini, placées en tête du tapis 3 qui les transporte sous le lecteur laser 4. Les cellules 5 déclenchent alors l'arrêt du tapis et initialisent la lecture du code porté par la poche.

Dès que le traitement de la lecture a été réalisé par l'ordinateur 26, la poche de sang est susceptible de subir deux orientations différentes.
- Soit elle est évacuée par le vérin 7 en direction de la goulotte 6 après le redémarrage du tapis 3. C'est le cas si par exemple le fichier central n'avait pas enregistré le code du donneur et l'analyse effectuée antérieurement du sang prélevé.
- Soit elle poursuit son chemin sur le tapis jusqu'à la prochaine cellule 17. C'est le cas où le fichier central dispose bien de l'analyse du sang correspondant et l'ordinateur a pu alors "accepter" la continuation des opérations.

En arrivant devant la cellule 17, la poche de sang commande à nouveau l'arrêt du tapis 3, et les mâchoires de blocage 18 se mettent en place pour immobiliser la poche en position afin qu'elle ne puisse se déplacer au cours de l'opération d'étiquetage.

Pendant le temps du trajet entre les cellules 5 et 17, l'ordinateur a envoyé les données aux robots de dépose 8 dont chaque imprimante a réalisé une étiquette à partir du rouleau distributeur 9. Simultanément l'ordinateur a autorisé le démarrage d'un cycle de dépose d'étiquettes sur la poche, par l'intermédiaire d'un automate.

L'étiquette imprimée délivrée par le robot 8 est prise en charge par la ventouse 13 puis le bras 11 pivote en position verticale et se déplace sur la potence 10 jusqu'à venir à l'aplomb de la poche de sang. Le vérin 12 déplace la ventouse jusqu'à l'application de l'étiquette sur la poche par soufflage. Puis après l'auto collage les bras reviennent à leur position initiale.

Durant le cycle de dépose des étiquettes, le retour d'une information de bonne exécution est transmis à l'automate qui déclenche l'ouverture des mâchoires 18, le redémarrage du tapis 3 et l'allumage du signal lumineux à l'entrée de la machine, qui permet l'introduction par l'opérateur, d'une poche de sang à l'entrée du premier tapis.

Avant de quitter le tapis 3, la poche de sang passe sous le rouleau 27 qui par son poids complète le collage de l'étiquette. La poche est alors prise en charge par le second tapis 14 et s'arrête devant les cellules 15. La balance 16 se stabilise et envoie les coordonnées de poids à l'ordinateur central.

Dès réception et validation par l'ordinateur, l'automate assure le redémarrage du tapis 14 entraînant à nouveau la poche de sang vers le troisième tapis 19 qui la prend en charge. Dès que les cellules 21 sont atteintes, le tapis s'arrête et la poche s'immobilise sous le lecteur laser 20. Ce dernier lit la totalité des codes-barre présents sur la poche et envoie les données à l'ordinateur. Après traitement, quatre cas se présentent.
- La lecture est bonne et la poche est acceptable. Le tapis 19 redémarre et le tiroir 23 oriente la poche vers la goulotte d'évacuation 24 qui correspond aux produits corrects et contrôlés, aptes à la transfusion.
- La lecture est bonne mais la poche n'est pas acceptable. Le vérin 22 commande alors le déplacement du tiroir 23 qui, après redémarrage du tapis, orientera la poche vers la goulotte 25 qui correspond aux produits rejetés.
- La lecture est mauvaise ou le code est erroné. L'ordinateur bloque le tapis et déclenche un signal sonore et/ou lumineux d'appel de l'opérateur.
- Le lecture est bonne mais le poids mesuré par la balance est en dehors des limites. L'ordinateur bloque le tapis et déclenche un signal sonore et/ou lumineux d'appel de l'opérateur qui décide ou non de libérer la poche de sang vers la goulotte 24.

Dans tous les cas de figure, l'ordinateur enregistre les données dans le fichier.

## Revendications

1. Procédé automatique d'étiquetage et de contrôle des poches de sang en retour d'analyse caractérisé en ce qu'il consiste :
- à déplacer par un premier moyen de transfert une poche de sang jusqu'à un premier poste de lecture du code ainsi que de l'analyse antérieure du sang prélevé,
- à comparer les données de lecture à celles mémorisées dans le fichier central d'un ordinateur,
- à poursuivre le déplacement de la poche de sang par ledit premier moyen de transfert jusqu'à un poste d'étiquetage automatique auquel l'ordinateur a transmis les données nécessaires à l'impression des étiquettes,
- à immobiliser la poche de sang durant l'opération de pose d'étiquettes,
- à déplacer la poche de sang étiquetée, par un second moyen de transfert, jusqu'à un poste de pesée,
- à évacuer la poche de sang, après vérification des lectures de codes-barre par un deuxième poste de lecture du code et vérification de la pesée, par un troisième moyen de transfert, vers une goulotte de réception des produits aptes à transfusion.

2. Procédé selon la revendication 1 caractérisé en ce que la poche de sang est évacuée du premier moyen de transfert si le fichier central de l'ordinateur n'a pas enregistré le code du donneur et l'analyse effectuée antérieurement, du sang prélevé.

3. Procédé selon la revendication 1 caractérisé en ce que la poche de sang est évacuée du troisième moyen de transfert vers une goulotte de réception des produits rejetés quand la lecture des codes et de la pesée n'est pas correcte.

4. Machine pour la mise en oeuvre du procédé selon les revendications 1 à 3 comprenant un châssis (1) supportant à une extrémité une table fixe d'alimentation (2) et plusieurs moyens de transfert (3, 14, 19) situés les uns à la suite des autres, pouvant acheminer les poches de sang vers des goulottes d'évacuation (24, 25) montées en bout du dernier moyen de transfert (19), au moins deux postes (4, 20) de lecture des codes et étiquettes portés par les poches de sang étant disposés respectivement en amont et en aval d'au moins un robot (8) de dépose d'étiquettes, la machine disposant également de moyens d'évacuation (6, 7, 23, 25) des poches hors de leur parcours d'acheminement normal, qui réagissent aux anomalies décelées par lesdits postes de lecture, un desdits moyens de transfert (14) comportant une unité de pesage (16).

5. Machine selon la revendication 4 caractérisée en ce que les moyens de transfert sont des tapis (3, 14, 19) constitués de trois bandes sans fin à entraînement motorisé et déroulement intermittent, chacun équipé latéralement de cellules photoélectriques (5, 15, 21) aptes à déceler le passage d'une poche de sang.

6. Machine selon les revendications 4 et 5 caractérisée en ce que un premier poste de lecture (4) est disposé au-dessus du premier tapis (3) à proximité de la table d'alimentation (2) et en ce qu'un second poste de lecture (20) est disposé au-dessus du troisième tapis (19), En amont des goulottes d'évacuation (24, 25).

7. Machine selon les revendications 4, 5 et 6 caractérisée en ce que un moyen d'évacuation est constitué d'un vérin pousseur (7) déplaçable au-dessus du premier tapis (3) en aval du premier poste de lecture (4) et d'une goulotte d'évacuation (6) disposée sur un côté dudit tapis.

8. Machine selon les revendications 4, 5 et 6 caractérisée en ce que un moyen d'évacuation est constitué d'un vérin (22) apte à déplacer un tiroir de distribution (23) des poches de sang, placée au-dessus du troisième tapis (19) en aval du second poste de lecture (20).

9. Machine selon la revendication 4, caractérisée en ce que le robot (8) de dépose d'étiquettes est équipé d'une potence fixe (10) se développant au-dessus du premier tapis (3) et portant un bras pivotant (11) pouvant coulisser sur la potence, l'extrémité inférieure du bras étant un vérin (12) se terminant par une ventouse porte étiquette (13).

10. Machine selon la revendication 9 caractérisée en ce que des mâchoires de blocage rétractables (18) maintiennent la poche de sang immobilisée sur la tapis (3) pendant l'opération de dépose d'étiquettes.

11. Machine selon la revendication 4 caractérisée en ce que deux robots (8) sont disposés de part et d'autre du premier tapis (3), au-dessus de sa zone terminale, pour déposer chacun une étiquette différente sur la même poche de sang.

12. Machine selon les revendications 4 et 5, caractérisée en ce que le second tapis (14) venant dans le prolongement du précédent est supporté par une balance (16) pour la pesée des poches de sang.

13. Machine selon la revendication 4, caractérisée en ce que les postes de lecture (4, 20), l'unité de pesage (16) ainsi que les robots de dépose (8) sont raccordés à un ordinateur central avec logiciels d'application et fichier de travail.

## Patentansprüche

1. Automatisches Verfahren zum Etikettieren und Kontrollieren von Blutbeuteln, die von Analysen zurückkommen,
**dadurch gekennzeichnet**, dass es darin besteht:
- einen Blutbeutel durch eine erste Fördereinrichtung bis zu einer ersten Lesestation des Codes sowie der vorhergehenden Analyse des entnommenen Blutes zu verschieben,
- die gelesenen Daten mit den in der Zentraldatei eines Computers gespeicherten Daten zu vergleichen,
- die Verschiebung des Blutbeutels durch die genannten ersten Fördereinrichtungen bis zu einer automatischen Etikettierstation zu verfolgen, an die der Computer die zum Ausdrucken der Etiketten notwendigen Daten geliefert hat,
- den Blutbeutel während der Operation des Aufbringens der Etiketten festzuhalten,
- den etikettierten Blutbeutel durch eine zweite Fördereinrichtung bis zu einer Wiegestation zu verschieben,
- den Blutbeutel nach Prüfung der Strichcode-Lektüren durch eine zweite Lesestation des Codes und Prüfung der Wägung durch eine dritte Förderstation in eine Rutsche zum Empfang der für die Transfusion geeigneten Produkte auszusteuern.

2. Verfahren nach Anspruch 1, dadurch gekennzeichnet, dass der Blutbeutel von der ersten Fördereinrichtung ausgesteuert wird, wenn in der Zentraldatei des Computers der Code des Spenders und der vorhergehend durchgeführten Analyse des entnommenen Blutes nicht abgespeichert sind.

3. Verfahren nach Anspruch 1, dadurch gekennzeichnet, dass der Blutbeutel von der dritten fördereinrichtung in eine Rutsche zum Empfang der zurückgewiesenen Produkte ausgesteuert wird, wenn die Lektüre der Codes und der Wägung nicht korrekt ist.

4. Vorrichtung zur Anwendung des Verfahrens nach den Ansprüchen 1 bis 3 mit einem Gestell (1), das an einem Ende einen festen Versorgungstisch (2) und mehrere, nacheinander angeordnete Fördereinrichtungen (3, 14, 19) umfaßt, die die Blutbeutel zu Aussteuerungsrutschen (24, 25) befördern, die am Ende der letzten Fördereinrichtung (19) angebracht sind, und wenigstens zwei Stationen (4, 20) zum Lesen der durch die Blutbeutel getragenen Codes und Etiketten, jeweils vor und hinter einem Etikettierautomaten (8), wobei die Vorrichtung auch über Einrichtungen (6, 7, 23, 25) zum Aussteuern der Beutel aus ihrer normalen Durchlaufstrecke verfügt, die auf die Anomalien reagieren, die durch die genannten Lesestationen festgestellt werden, und eine der Fördereinrichtungen (14) eine Wiegeeinrichtung (16) umfaßt.

5. Vorrichtung nach Anspruch 4, dadurch gekennzeichnet, dass die Fördereinrichtungen Bänder (3, 14, 19) sind, gebildet durch drei Endlosbänder mit motorisiertem Antrieb und intermittierendem Gang bzw. Lauf, wobei jedes seitlich mit photoelektrischen Zellen (5, 15, 21) ausgerüstet ist, die den Durchgang eines Blutbeutels feststellen können.

6. Vorrichtung nach einem der Ansprüche 4 und 5, dadurch gekennzeichnet, dass eine erste Lesestation (4) über dem ersten Band (3) in der Nähe des Versorgungstisches (2) angeordnet ist, und dadurch, dass eine zweite Lesestation (20) über dem dritten Band (19) angeordnet ist, vor den Aussteuerungsrutschen (24, 25).

7. Vorrichtung nach einem der Ansprüche 4, 5 und 6, dadurch gekennzeichnet, dass eine Aussteuerungseinrichtung durch einen Schiebezylinder (7) gebildet wird, verschiebbar über dem ersten Band (3), hinter der ersten Lesestation (4), und durch eine Aussteuerungsrutsche (6), angeordnet auf einer Seite des genannten Bandes.

8. Vorrichtung nach einem der Ansprüche 4, 5 und 6, dadurch gekennzeichnet, dass eine Aussteuerungseinrichtung durch einen Zylinder (22) gebildet wird, der fähig ist, einen Verteilungsschieber (23) der Blutbeutel zu verschieben, der sich über dem dritten Band (19) befindet, hinter der zweiten Lesescation (20).

9. Vorrichtung nach Anspruch 4, dadurch gekennzeichnet, daß der Etikettierautomat (8) mit einem feststehenden Träger (10) ausgerüstet ist, der über das erste Band (3) ragt und einen Schwenkarm (11) trägt, der auf dem Träger gleiten kann, wobei das untere Ende des Arms ein Zylinder (12) ist, der durch eine etikettentragende Saugeinrichtung (13) endet.

10. Vorrichtung nach Anspruch 9, dadurch gekennzeichnet, dass zurückziehbare Blockierungsbacken (18) den Blutbeutel während der Etikettieroperation auf dem Band (3) festhalten.

11. Vorrichtung nach Anspruch 4, dadurch gekennzeichnet, dass zwei Automaten (8) beiderseits des ersten Bands (3) angeordnet sind, über seiner Endzone, von denen jeder eine andere Etikette auf demselben Blutbeutel anbringt.

12. Vorrichtung nach einem der Ansprüche 4 und 5, dadurch gekennzeichnet, dass das zweite Band (14), das sich in der Verlängerung des vorangehenden befindet, durch eine Waage (16) zum Wiegen der Blutbeutel getragen wird.

13. Vorrichtung nach Anspruch 4, dadurch gekennzeichnet, dass die Lesestationen (4, 20), die Wiegeeinheit (16) sowie die Etikettierautomaten (8) an einen Zentralcomputer mit Anwendungs-Software und Arbeitsdatei angeschlossen sind.

## Claims

1. Automatic process for labelling and checking blood bags returning from analysis, characterized in that it consists:
- in moving a blood bag, by means of a first transfer means, to a first station for reading the code as well as the prior analysis of the blood sampled;
- in comparing the data read with that memorized in the central data bank of a computer;
- in continuing to move the blood bag, by means of the said first transfer means, to an automatic labelling station to which the computer has sent the data needed for printing the labels;
- in immobilizing the blood bag during the label appending operation;
- in moving the labelled blood bag, by means of a second transfer means, to a weighing station;
- in evacuating the blood bag, after verification of the bar code readings by means of a second station for reading the code and weighing verification, by means of a third transfer means, to a chute for the reception of the products suitable for transfusion.

2. Process according to claim 1, characterized in that the blood bag is discharged from the first transfer means if the central data bank of the computer has not recorded the code of the donor and the analysis, carried out previously, of the blood sampled.

3. Process according to claim 1, characterized in that the blood bag is evacuated from the third transfer means to a chute for receiving the rejected products when the reading of the codes and the weighing is not correct.

4. Machine for implementing the process according to claims 1 to 3, comprising a chassis (1) supporting, at one end, a fixed supply table (2) and several transfer means (3, 14, 19), placed one after the other, capable of routing the blood bags to discharge chutes (24, 25) mounted at the end of the last transfer means (19), at least two stations (4, 20) for reading the codes and labels on the blood bags being disposed respectively upstream and downstream of at least one label appending robot (8), the machine being provided with means (6, 7, 23, 25) for removing the bags from their usual travel paths, reacting to anomalies detected by the said reading stations, and one transfer means (14) comprising a weighing unit (16).

5. Machine according to claim 4, characterized in that the transfer means are conveyor belts (3, 14, 19) formed by three motor-driven, intermittently running endless belts, each equipped laterally with photocells (5, 15, 21) capable of detecting the passage of a blood bag.

6. Machine according to claims 4 and 5, characterized in that a first reading station (4) is disposed above the first belt (3) in the vicinity of the supply table (2) and in that a second reading station (20) is disposed above the third belt (19), upstream of the discharge chutes (24, 25).

7. Machine according to claims 4, 5 and 6, characterized in that one discharge means is formed by a pusher jack (7) moveable above the first belt (3) downstream of the first reading station (4) and by a discharge chute (6) disposed on one side of the said belt.

8. Machine according to claims 4, 5 and 6, characterized in that one discharge means is formed by a jack (22) capable of displacing a sliding member (23) for distributing the blood bags, placed above the third belt (19) downstream of the second reading station (20).

9. Machine according to claim 4, characterized in that the label-appending robot (8) is equipped with a fixed boom (10) extending above the first belt (3) and bearing a pivotal arm (11) capable of sliding along the boom, the lower end of the arm being a jack (12) ending in a label holding sucker (13).

10. Machine according to claim 9, characterized in that retractable blocking jaws (18) hold the blood bag immobilized on the belt (3) during the label appending operation.

11. Machine according to claim 4, characterized in that two robots (8) are disposed on either side of the first belt (3), above its terminal area, in order for each to append a different label on the same blood bag.

12. Machine according to claims 4 and 5, characterized in that the second belt (14) extending on from the preceding one, is supported by scales (16) for weighing the blood bags.

13. Machine according to claim 4, characterized in that the reading stations (4, 20), the weighing unit (16) and the label-appending robots (8) are connected to a central computer with application software and a working data base.
